# EUROPEAN PATENT APPLICATION

(11) **EP 3 061 849 A1**
(43) Date of publication of application: **31.08.2016**
(21) Application number: 16157300.1
(22) Date of filing: 25.02.2016
(51) Int. Cl.: C23C 26/00, B23K 9/04, B23K 11/00, F01D 5/28

(54) **METHOD FOR COATING COMPRESSOR BLADE TIPS**

(30) Priority: 25.02.2015 US 201514630965
(71) Applicant: United Technologies Corporation, Farmington, CT 06032 (US)
(72) Inventor: STROCK, Christopher W., Kennebunk, ME Maine 04043 (US); GUO, Changsheng, South Windsor, CT Connecticut 06074 (US)
(74) Representative: Iceton, Greg James

(57) **Abstract**

A method for forming a component having an abrasive portion includes forming the component and selectively forming a coating on the component using electric spark deposition to form the abrasive portion. A method for coating a blade tip with an abrasive material includes forming a blade having a tip and depositing a coating on the blade tip using electric spark deposition. A method includes providing a casing having an inner diameter surface, locating an abradable coating on a portion of the inner diameter surface, providing a blade configured to rotate within the casing and having a blade tip where the blade tip and the inner diameter surface of the casing form a seal, and depositing an abrasive coating on the blade tip using electric spark deposition so that the abrasive coating and abradable coating interact during rotation of the blade within the casing.

## Description

### BACKGROUND

Gas turbine engines include one or more compressors for compressing air prior to combustion. One or more rows of compressor blades extend radially outward from a hub or rotor and towards an inner surface of the compressor casing. During operation, the blades rotate about a central axis and direct the flow of and compress fluids (e.g., air) within the compressor. A seal is formed between the radially outermost end of a compressor blade, the blade tip, and the inner surface of the casing. In some compressors, the blade tip is coated with an abrasive material and the inner surface of the casing is coated with an abradable material to form a seal. During rotation, the abrasive material on the blade tip rubs against and abrades the abradable material on the casing to form a tight seal between the blade tip and the casing. Maintaining a tight air seal between the blades and compressor casing is needed for optimum gas turbine engine operation.

### SUMMARY

A method for forming a component having an abrasive portion includes forming the component and selectively forming a coating on the component using electric spark deposition to form the abrasive portion.

A method for coating a blade tip with an abrasive material includes forming a blade having a tip and depositing a coating on the blade tip using electric spark deposition.

A method includes providing a casing having an inner diameter surface, locating an abradable coating on a portion of the inner diameter surface, providing a blade configured to rotate within the casing and having a blade tip where the blade tip and the inner diameter surface of the casing form a seal, and depositing an abrasive coating on the blade tip using electric spark deposition so that the abrasive coating and abradable coating interact during rotation of the blade within the casing.

### BRIEF DESCRIPTION OF THE DRAWINGS

FIG. 1 is a cross section view of a gas turbine engine.
FIG. 2 is a cross section view of a compressor illustrating a blade and compressor casing.
FIG. 3 is a view of a compressor blade tip and an electric spark discharge electrode.

### DETAILED DESCRIPTION

The present disclosure describes a method for applying a ceramic coating on compressor blade tips. Electric spark discharge (ESD) is used to apply the ceramic coating to blade tips. ESD allows the thin blade tips to be coated without the need for masking other portions of the blade, reducing manufacturing time and costs. The resulting ceramic coating has low thermal conductivity compared to the base metal of the blade, has strength at elevated surface temperatures to produce a desired wear ratio, and has surface roughness to aid in reducing rub forces and surface temperature.

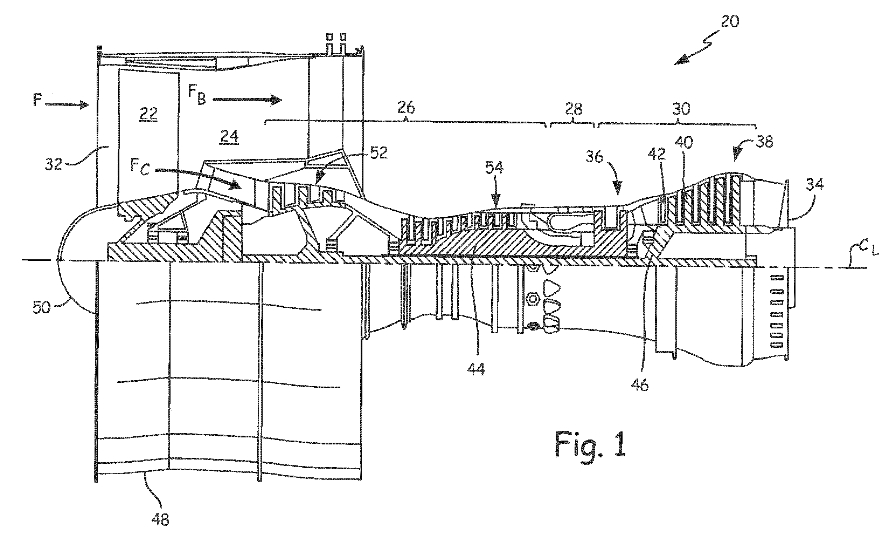

FIG. 1 illustrates a cross-sectional view of gas turbine engine 20. Gas turbine engine 20 includes fan 22 with bypass duct 24 oriented about a turbine core having compressor section 26, combustor section 28, and turbine section 30, which are arranged in flow series along an axial direction with an upstream inlet 32 and downstream exhaust 34.

Turbine section 30 includes high-pressure turbine (HPT) section 36 and low-pressure turbine (LPT) section 38. Turbine sections 36 and 38 each have a number of alternating turbine blades 40 and turbine vanes 42. Turbine vanes 42 are circumferentially oriented with respect to one another, and collectively form a full, annular vane ring about turbine centerline axis C*_{L}* of gas turbine engine 20. HPT section 36 of turbine 30 is coupled to compressor section 26 via shaft 44, forming the high pressure spool. LPT section 38 is coupled to fan 22 via shaft 46, forming the low pressure spool. Shaft 46 is coaxially mounted within shaft 44, about turbine centerline axis C*_{L}*.

Fan 22 is typically mounted to a fan disk or other rotating member, which is driven by shaft 46. As shown in FIG. 1, for example, fan 22 is forward-mounted in engine cowling 48, upstream of bypass duct 24 and compressor section 26, with spinner 50 covering the fan disk to improve aerodynamic performance. Alternatively, fan 22 is aft-mounted in a downstream location, and the coupling configuration varies. Furthermore, while FIG. 1 illustrates a particular two-spool high-bypass turbofan embodiment of gas turbine engine 20, this example is merely illustrative. In other embodiments, gas turbine engine 20 is configured either as a low-bypass turbofan or a high-bypass turbofan, as described above, and the number of spools and fan position vary.

In operation of gas turbine engine 20, airflow F enters via upstream inlet 32 and divides into bypass flow F*_{B}* and core flow F*_{C}* downstream of fan 22. Bypass flow F*_{B}* passes through bypass duct 24 and generates thrust; core flow F*_{C}* passes along the gas path through compressor section 26, combustor section 28 and turbine section 30.

Compressor section 26 includes low pressure compressor 52 and high pressure compressor 54, which together compress incoming air for combustor section 28 where it is mixed with fuel and ignited to produce hot combustion gas. The combustion gas exits combustor section 28 and enters HPT section 36 of turbine section 30, driving shaft 44 and thereby compressor section 26. Partially expanded combustion gas transitions from HPT section 36 to LPT section 38, driving fan 22 via shaft 46. Exhaust gas exits gas turbine engine 20 via downstream exhaust 34.

The thermodynamic efficiency of gas turbine engine 20 is strongly tied to the overall pressure ratio, as defined between the compressed air pressure entering combustor section 28 and the delivery pressure at upstream inlet 32. In general, higher pressure ratios offer increased greater specific thrust, and may result in higher peak gas path temperatures, particularly downstream of combustor section 28, including HPT section 36.

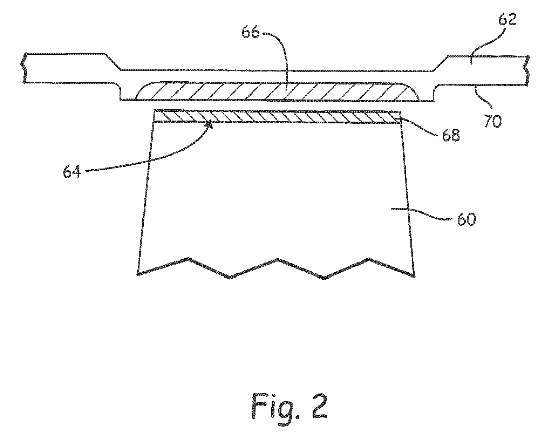

FIG. 2 illustrates a cross section view of a compressor showing blade 60 and compressor casing 62. Blade 60 rotates within compressor casing 62 to compress air from fan 22 before it is delivered to combustor section 28. In some embodiments, blade 60 is part of an integrally bladed rotor. Blade tip 64 is located at a radially outward portion of blade 60. Abradable material 66 is located at a radially inward portion of casing 62. In order to operate at peak efficiency, blade 60 and casing 62 must form a tight seal. One way to seal blade 60 and casing 62 is to form or coat blade tip 64 with an abrasive (abrasive material 68) and position abradable material 66 along inner surface 68 of casing 62 directly across from blade tip 64. As blade 60 rotates, temperatures within the compressor increase, blade 60 and casing 62 expand, and blade tip 64 (with abrasive material 68) and abradable material 66 rub against one another. As the two components rub, a portion of abradable material 66 is worn away. Just enough abradable material 66 is removed so that a tight seal is formed between blade tip 64 and casing 22.

Abradable material 66 can be "soft" and have a porosity that makes it abradable with respect to bare metal blades. Alternatively, abradable material 66 can be generally "hard" and have a higher density and smoother surface be and gas impermeable. "Hard" abradables typically yield improved efficiency when compared to "soft" abradables. In some embodiments, abradable material 66 is a CoNiCrAlY or NiCoCrAlY alloy, where Co is cobalt, Ni is nickel, Cr is chromium, A1 is aluminum and Y is yttrium. Blade tip 64 is constructed from abrasive material 68 or abrasive material 68 is applied to blade tip 64. In some embodiments, blade 60 is a metallic blade and abrasive material 68 applied to blade tip 64 is a ceramic coating. Abrasive material 68 is generally stronger than abradable material 66 so that blade tip 64 cuts into abradable material 66 to form the seal. However, wear occurs on both abradable material 66 and abrasive material 68. Depending on composition, blade tip 64 can soften at high temperatures and experience increased wear.

The present disclosure describes a blade tip, and a method for forming such a blade tip, that experiences decreased wear even when paired with "hard" abradable materials. As described herein, ESD is used to coat blade tip 64 with abrasive material 68. ESD is a contact metal deposition process. ESD is also sometimes referred to as electrospark deposition, spark hardening, electrospark toughening, electrospark alloying, pulse fusion surfacing and pulse electrode surfacing.

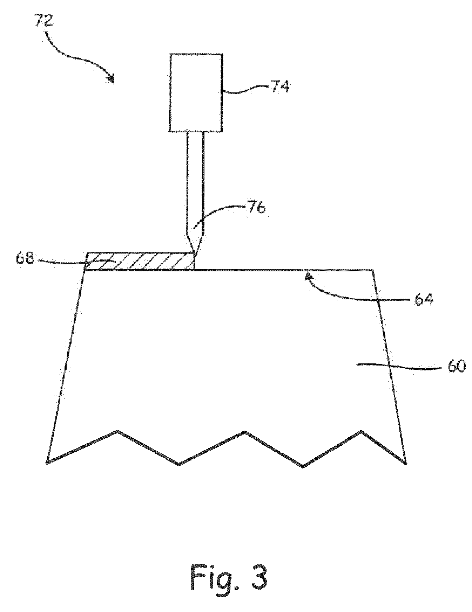

FIG. 3 illustrates a system and method for applying abrasive material 68 to blade tip 64 by ESD. ESD device 72 includes capacitor-based power supply 74 and electrode 76. Abrasive material 68 is formed on blade tip 64 by electrode 76. Electrode 76 is positioned so that it is very close to or contacting blade tip 64. Using power supply 74, a voltage is applied to electrode 76. A voltage is also applied to blade 60. The voltage applied to electrode 76 is greater than that applied to blade 60, and blade 60 acts as a ground. The voltage difference between electrode 76 and blade 60 generates a plasma arc at a high temperature between electrode 76 and blade tip 64. In some embodiments the temperature ranges from about 8,000 °C to about 25,000 °C. The plasma arc ionizes a portion of electrode 76 and a small amount of molten electrode material is transferred from electrode 76 to blade tip 64. The molten electrode material solidifies on blade tip 64 as abrasive material 68. Electrode 76 is positioned at another location along blade tip 64 and the arc/ionization process is repeated until abrasive material 68 is applied to the desired part of blade tip 64.

In some embodiments, electrode 76 contains a material selected from the group consisting of aluminum, zirconium, chromium, hafnium, cerium, titanium, silicon and combinations thereof. Some amount of oxidation generally occurs as a result of the arc/ionization process. Thus, the metal(s) of electrode 76 are deposited on blade tip 64 as metal(s) and metal oxides. Therefore, the deposited abrasive material 68 can be a ceramic coating. In some embodiments, abrasive material 68 is a ceramic selected from the group consisting of alumina, zirconia, chromia, hafnia, ceria, titania, silica and combinations thereof. In some embodiments, abrasive material 68 is between about 25% metal oxide by volume and about 100% metal oxide by volume. In particular embodiments, abrasive material 68 is greater than about 75% metal oxide by volume. Having some metal content (in addition to the metal oxide content) within abrasive material 68 can provide a strength or spallation benefit to blade tip 64.

Electrode 76 can also contain fine ceramic particles along with metals such as those listed above. Electrode 76 can include aluminum oxide particles having average diameters between about 1 and 10 microns. Including ceramic particles in and on electrode 76 can increase the speed that abrasive material 68 is formed on blade tip 64 as less material must be oxidized.

Non-oxide materials can also be deposited on blade tip 64 as abrasive material 68. In these embodiments, electrode 76 contains materials including, but not limited to, silicon carbide, tungsten carbide, titanium carbide, boron carbide (B₄C), cubic boron nitride, aluminum diboride, diamond and combinations thereof.

In some embodiments, the deposition process described above occurs in a process bath where electrode 76 approaches blade tip 64 with a small clearance therebetween. Blade tip 64 and/or electrode 76 are rotated during deposition. Rotation of electrode 76 and blade tip 64 can help to evenly distribute molten electrode material to blade tip 64. Unlike other processes for making abrasive blade tips, such as thermal spray or plating, the disclosed ESD method does not require masking parts of blade 60. ESD allows selective placement of abrasive material 68 to blade tips 64.

Abrasive material 68 can be deposited onto blade tip 64 at varying thicknesses. In some embodiments, abrasive material 68 is applied to blade tip 64 so that it has a thickness between about 0.025 millimeters (0.001 inches) and about 0.51 millimeters (0.020 inches). In more particular embodiments, abrasive material 68 is applied to blade tip 64 so that it has a thickness between about 0.10 millimeters (0.004 inches) and about 0.305 millimeters (0.012 inches).

The disclosed ESD method can provide blade tip 64 with abrasive material 68 having a roughened surface. A roughened surface reduces the number of contact points between blade tip 64 and abradable material 66, thereby reducing the surface temperatures while blade tip 64 rubs abradable material 66. The reduction in temperature reduces the amount of wear on abrasive material 68 and blade tip 64. In some embodiments, abrasive material 68 applied to blade tip 64 has a surface roughness (Rₐ) between about 1.25 micrometers (50 microinches) and about 5 micrometers (200 microinches). The surface roughness of abrasive material 68 and blade tip 64 can be adjusted by varying the ESD parameters to create a desired wear ratio between abrasive material 68 and abradable material 66. In some embodiments, the surface roughness provided to abrasive material 68 creates a volumetric wear ratio of abrasive material 68 to abradable material 64 between about 1:50 and about 1:500. In one particular embodiment, the surface roughness provided to abrasive material 68 creates a wear ratio of abrasive material 68 to abradable material 66 of about 1:400.

Forming a ceramic coating on blade tip 64 according to the disclosed ESD method provides advantages over other deposition techniques. ESD does not require the use of masks needed for thermal spray and plating processes. ESD can also create a roughened ceramic coating on blade tips to reduce blade wear and/or generate a desired wear pattern. While the disclosed ESD method has been described with reference to a compressor blade tip for a gas turbine engine, other components, such as those in industrial gas turbine applications, having an abrasive material can be formed in a similar manner.

### Discussion of Possible Embodiments

The following are non-exclusive descriptions of possible embodiments of the present invention.

A method for forming a component having an abrasive portion can include forming the component and selectively forming a coating on the component using electric spark deposition to form the abrasive portion.

The method of the preceding paragraph can optionally include, additionally and/or alternatively, any one or more of the following features, configurations and/or additional components:
A further embodiment of the foregoing method can include that the component is a blade and that the abrasive portion is located at a blade tip.

A further embodiment of any of the foregoing methods can include that the coating has a surface roughness (Rₐ) between about 1.25 micrometers (50 microinches) and about 5 micrometers (200 microinches).

A further embodiment of any of the foregoing methods can include that the coating has a thickness between about 0.025 millimeters (0.001 inches) and about 0.51 millimeters (0.020 inches).

A further embodiment of any of the foregoing methods can include that the coating has a thickness between about 0.10 millimeters (0.004 inches) and about 0.305 millimeters (0.012 inches).

A further embodiment of any of the foregoing methods can include that the coating is selected from the group consisting of alumina, zirconia, chromia, hafnia, ceria, titania, silica and combinations thereof

A further embodiment of any of the foregoing methods can include that the coating is selected from the group consisting of silicon carbide, tungsten carbide, titanium carbide, boron carbide, cubic boron nitride, aluminum diboride, diamond and combinations thereof.

A further embodiment of any of the foregoing methods can include that a metal oxide content of the coating is between about 25% by weight and about 100% by weight.

A further embodiment of any of the foregoing methods can include that the step of selectively forming the coating on the component using electric spark deposition includes applying a voltage between an electrode containing aluminum, zirconium, chromium, hafnium, cerium, titanium, silicon and combinations thereof and the component and moving the electrode toward the component so that a portion of the electrode is deposited on the component.

A further embodiment of any of the foregoing methods can include that the coating is formed to provide an abrasive:abradable wear ratio of the abrasive portion of the component to an abradable portion of a stationary component adjacent the component, and wherein the abrasive:abradable wear ratio is between about 1:50 and about 1:500.

A further embodiment of any of the foregoing methods can include that the abrasive:abradable wear ratio is about 1:400.

A further embodiment of any of the foregoing methods can include that the abradable portion of a stationary component comprises a CoNiCrAlY or NiCoCrAlY alloy.

A further embodiment of any of the foregoing methods can include that the coating is formed without use of masking techniques.

A method for coating a blade tip with an abrasive material can include forming a blade having a tip and depositing a coating on the blade tip using electric spark deposition.

The method of the preceding paragraph can optionally include, additionally and/or alternatively, any one or more of the following features, configurations and/or additional components:
A further embodiment of the foregoing method can include that the coating is formed without use of masking techniques.

A further embodiment of any of the foregoing methods can include that coating comprises alumina, zirconia, chromia, hafnia, ceria, titania, silica and combinations thereof.

A method can include providing a casing having an inner diameter surface, locating an abradable coating on a portion of the inner diameter surface, providing a blade configured to rotate within the casing and having a blade tip where the blade tip and the inner diameter surface of the casing form a seal, and depositing an abrasive coating on the blade tip using electric spark deposition so that the abrasive coating and abradable coating interact during rotation of the blade within the casing.

The method of the preceding paragraph can optionally include, additionally and/or alternatively, any one or more of the following features, configurations and/or additional components:
A further embodiment of the foregoing method can include that the abradable coating comprises a CoNiCrAlY or NiCoCrAlY alloy.

A further embodiment of any of the foregoing methods can include that the abrasive coating has a thickness between about 0.025 millimeters (0.001 inches) and about 0.51 millimeters (0.020 inches).

A further embodiment of any of the foregoing methods can include that the abrasive coating comprises alumina, zirconia, chromia, hafnia, ceria, titania, silica and combinations thereof.

While the invention has been described with reference to an exemplary embodiment(s), it will be understood by those skilled in the art that various changes may be made without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. A method for forming a component having an abrasive portion, the method comprising:
forming the component; and
selectively forming a coating on the component using electric spark deposition to form the abrasive portion.

2. The method of claim 1, wherein the component is a blade, and wherein the abrasive portion is located at a blade tip.

3. The method of claims 1 or 2, wherein the coating has a surface roughness (Rₐ) between about 1.25 micrometers (50 microinches) and about 5 micrometers (200 microinches).

4. The method of any preceding claim, wherein the coating has a thickness between about 0.025 millimeters (0.001 inches) and about 0.51 millimeters (0.020 inches).

5. The method of claim 4, wherein the coating has a thickness between about 0.10 millimeters (0.004 inches) and about 0.305 millimeters (0.012 inches).

6. The method of any preceding claim, wherein the coating is selected from the group consisting of alumina, zirconia, chromia, hafnia, ceria, titania, silica and combinations thereof.

7. The method of any preceding claim, wherein the coating is selected from the group consisting of silicon carbide, tungsten carbide, titanium carbide, boron carbide, cubic boron nitride, aluminum diboride, diamond and combinations thereof.

8. The method of any preceding claim, wherein a metal oxide content of the coating is between about 25% by weight and about 100% by weight.

9. The method of any preceding claim, wherein the step of selectively forming the coating on the component using electric spark deposition, comprises:
applying a voltage between an electrode containing aluminum, zirconium, chromium, hafnium, cerium, titanium, silicon and combinations thereof and the component; and
moving the electrode toward the component so that a portion of the electrode is deposited on the component.

10. The method of any preceding claim, wherein the coating is formed to provide an abrasive:abradable wear ratio of the abrasive portion of the component to an abradable portion of a stationary component adjacent the component, and wherein the abrasive:abradable wear ratio is between about 1:50 and about 1:500.

11. The method of claim 10, wherein the abrasive:abradable wear ratio is about 1:400.

12. The method of claim 10, wherein the abradable portion of a stationary component comprises a CoNiCrAlY or NiCoCrAlY alloy.

13. The method of any preceding claim, wherein the coating is formed without use of masking techniques.

14. The method of any preceding claim wherein the component is a blade having a tip; and the method further comprising:
depositing the coating on the blade tip using electric spark deposition.

15. The method of claim 1 further comprising:
providing a casing having an inner diameter surface;
locating an abradable coating on a portion of the inner diameter surface;
providing a blade configured to rotate within the casing and having a blade tip, wherein the blade tip and the inner diameter surface of the casing form a seal; and
depositing an abrasive coating on the blade tip using electric spark deposition so that the abrasive coating and abradable coating interact during rotation of the blade within the casing.
